# EUROPÄISCHE PATENTSCHRIFT

(11) **EP 0 755 777 B1**
(45) Veröffentlichungstag und Bekanntmachung des Hinweises auf die Patenterteilung: **17.10.2001**
(21) Anmeldenummer: 96109683.1
(22) Anmeldetag: 17.06.1996
(51) Int. Cl.: B32B 27/08, B32B 27/34

(54) **Gleitfähige, siegelbare Mehrschichtfolie mit verbesserter Tiefziehbarkeit auf Basis von Polyamid und Polyolefinen**
Non-blocking sealable multilayer film with improved deep-drawability based on polyamide and polyolefins
Feuille multicouche scellable et résistant au blocage présentant une meilleure aptitude à l'emboutissage profond à base de polyamide et polyoléfines

(30) Priorität: 29.06.1995 DE 19528131
(43) Veröffentlichungstag der Anmeldung: 29.01.1997
(73) Patentinhaber: WOLFF WALSRODE AG, 29655 Walsrode (DE)
(72) Erfinder: Gasse, Andreas, Dr., 29664 Walsrode (DE); Klein, Rudi, 29664 Walsrode (DE)
(74) Vertreter: Kutzenberger, Helga, Dr.

(56) Entgegenhaltungen:
- EP-A- 0 465 931
- EP-A- 0 585 459
- EP-A- 0 613 774
- AU-A- 2 570 088

## Beschreibung

Die vorliegende Erfindung betrifft eine Mehrschichtfolie auf Basis von Polyamid und Polyolefinen, die sich durch besonders gute Tiefziehbarkeit bei gleichzeitig guter Gleitfähigkeit auszeichnet. Anwendung findet eine solche Folie insbesondere in der Verpackung von Lebensmitteln.

Kombinationen aus Polyamid und Polyolefinen sind traditionell charakteristisch für flexible Tiefziehfolien, die zur Verpackung von Lebensmitteln wie Wurst, Käse u.s.w. eingesetzt werden. Dazu verwendet man üblicherweise Polyamid als Trägermaterial und Polyolefine als Siegelschichtmaterial (z.B. GB 2 023 088). Traditionell wird in Tiefziehfolien als Polyamidtype überwiegend Polyamid 6 eingesetzt.

Abweichend von der Verwendung des reinen Polyamid 6, findet man auch den Einsatz von Polyamidblends aus amorphen und aliphatischen Polyamiden in der Patentliteratur, z.B. bei den gereckten Folien (EP 0 065 278, FR 2 348 805, US 4 800 129). Diese Folien haben den Nachteil, daß sie aufgrund des Reckens - in der Regel wird z.B. aus Festigkeits- und/oder Kostengründen eine technisch maximale, biaxiale oder monoaxiale Verstreckung angestrebt - nicht mehr tiefziehbar und damit grundsätzlich für die gewünschten Anwendungen unbrauchbar sind.

Ferner wird der Einsatz von Polyamidblends enthaltend aliphatisches und amorphes Polyamid auch in tiefziehbaren Folien beschrieben. In der Patentliteratur findet man Folien, die mit einer einzigen solchen Polyamidblend-Schicht auskommen (EP 0 408 390, AU 8 825 700, EP 0 358 038, JP 1 006 056, DE 2 309 420). Solche Folien sind dadurch gekennzeichnet, daß sie zwar besser verstreckbar sind (z.B. EP 0 408 390, Beispiel III, Tabelle 3), als Polyamid 6-Folien (Polyamid 6 ist deutlich stärker kristallisiert als ein Polymerblend enthaltend amorphes Polyamid), jedoch deutlich höhere Reibkoeffizienten aufweisen (Jacobi, H.R., Kunststoffe 47 (1957), S.129; Vieweg R., Müller A., Kunststoffhandbuch Bd. IV, C. Hanser Verl. München 1966, S.540) und damit schlecht gleitfähig sind.

Darüber hinaus sind aus der Patentliteratur Folien bekannt, die mit zwei Schichten auskommen, wobei eine Schicht aus einem Polyamidblend enthaltend aliphatisches und amorphes Polyamid und eine weitere aus siegelbarem Material besteht (EP 0 526 814, JP 60 097 850, EP 0 287 839, EP 0 104 436). Diese Folien haben gegenüber den einschichtigen Folien zwar den Vorteil, daß sie siegelbar sind, das Problem der schlechten Gleitfähigkeit besteht aber weiterhin.

Die EP-A-613 774 beschreibt tiefziehbare Polyamid enthaltende Folien der Sequenzanordnung ABCD, wobei die Sequenz A aus mindestens einem Caprolactam und/oder einer Mischung aus aliphatischen Polyamid mit Copolyamid und/oder amorphem Polyamid besteht.

Zusammenfassend kann festgestellt werden, daß aus der Patentliteratur keine Folien auf Basis von Polyamid und Polyolefinen bekannt sind, die die Eigenschaften gute Tiefziehbarkeit, Siegelbarkeit und gute Gleitfähigkeit gleichzeitig aufweisen.

Es stellt sich daher die Aufgabe, eine Folie auf Basis von Polyamid und Polyolefinen bereitzustellen, die die Eigenschaften
- gute Tiefziehbarkeit
- Siegelbarkeit und
- gute Gleitfähigkeit
gleichzeitig aufweist.

Überraschenderweise gelang dies durch eine gleitfähige, siegelbare, sehr gut tiefziehbare Verbundfolie auf Basis von Polyamid und Polyolefinen, die dadurch gekennzeichnet ist, daß die Folie aus mindestens einer Schicht aus aliphatischem Polyamid (A) und mindestens einer Schicht aus einem Polymerblend (B), welches aus 10-60 Gew.% aus amorphem Polyamid, das aus Isophthalsäure und/oder Terephthalsäure mit alkylsubstituiertem Hexamethylendiamin hergestellt wurde und 40-90 % aliphatischem Polyamid und mindestens einer thermoplastischen Siegelschicht (C), wobei die thermoplastische Siegelschicht einen Kristallitschmelzpunkt von 150°C oder kleiner aufweist und aus der Gruppe der Polyethylene, Copolymere der Polyethylene, Polypropylene, Copolymere der Polypropylene, Polybutylene oder lonomere entstammt und mindestens einer Verbindungsschicht (D) besteht, so angeordnet, daß eine Siegelschicht und eine Schicht aus aliphatischem Polyamid auf den Außenseiten der Folie liegen. Die Folie muß ungereckt sein.

Das aliphatische Polyamid besteht aus den Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, oder aus einer Mischung der genannten Polyamide.

Das amorphe Polyamid ist ein solches, daß aus Isophthalsäure und/oder Terephthalsäure mit alkylsubstituiertem Hexamethylendiamin hergestellt wurde.

Die thermoplastische Siegelschicht besteht dabei vorzugsweise aus Polyethylen (LD, LLD), Ethylen/Vinylacetat, Ethylen/Propylen-Copolymer, Ionomer der Zn- oder Na-Type, Polyisobutylen, Polybuten-1, oder Ethylen/(Meth)acrylsäure-Copolymer.

Die Verbindungschichten bestehen aus einem Klebstoffsystem und/oder einem polymeren Haftvermittler. Das Klebstoffsystem ist ein 2-Komponenten Polyurethan-Klebstoffsystem. Der polymere Haftvermittler ist ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)-acrylat, ein anhydridmodifiziertes Ethylenvinylacetat, ein säure-/acrylatmodifiziertes Ethylenvinylacetat oder ein Polymerblend, enthaltend mindestens einen der genannten Haftvermittler. Vorzugsweise ist der Haftvermittler ein anhydridmodifiziertes Polyethylen oder Polypropylen-Copolymer.

Mindestens eine Schicht kann mit Gleit- und/oder Antiblockmittel ausgerüstet sein, wobei das Gleitmittel vorzugsweise ein Amidwachs und das Antiblockmittel ein modifiziertes natürliches Kieselsäureprodukt ist. Besonders interessant ist die Ausrüstung der Siegelschicht und/oder die Schicht aus aliphatischem Polyamid mit Gleitund Antiblockmittel.

Bevorzugte Folienaufbauten sind:
- A/D/B/D/C,
- A/B/A/D/C oder
- A / EVOH / B / D / C, wobei EVOH ein Ethylen/Vinylalkohol-Copolymeres ist.

Zwischen den Schichten D und C können gegebenenfalls Zwischenschichten angeordnet werden, welche eine gute Verbundhaftung zu D und C haben und z.B. identisch mit C sein können.

Die Gesamtdicke der Folie beträgt 15 bis 400 µm, vorzugsweise 50 bis 330 µm.

Die Folie ist für die Bedruckung geeignet. Es kann mindestens eine Schicht eingefärbt oder bedruckt sein.

Die Folie ist besonders für Verpackungsanwendungen, besonders für die Verpackung von Lebensmitteln geeignet. Die Folie ist geeignet für die Verpackung von Fleischund Wurstprodukten, Milchprodukten, Fisch- und Räucherwaren, Fertiggerichten, Brot- und Backwaren und medizinisch-technischen Geräten.

Überraschenderweise ist es durch die erfindungsgemäße Zusammensetztung der Folie gelungen, die Forderung nach guter Gleitfähigkeit bei gleichzeitig guter Tiefziehbarkeit zu erfüllen. Nach dem Stand der Technik ist bekannt, daß im Vergleich zu aliphatischen Polyamiden Polyamidblends, enthaltend aromatisches Polyamid, etwas leichter tiefziehbar sind; letzt genannte Blends sind aber durch schlechte Gleitfähigkeit gekennzeichnet (siehe oben, Stand der Technik). Bei der erfindungsgemäßen Kombination beider Schichten könnte man daher erwarten, daß die gegenläufigen Effekte eine mittlere Tiefziehbarkeit ergeben. Überraschenderweise ergibt sich aber eine nochmals verbesserte Tiefziehbarkeit bei guter Gleitfähigkeit.

Für die Herstellung der Folie kommen Coextrusion (Blasfolie oder Flachfilm) oder auch die Einzelfertigung der Schichten A, B und C in Frage, die dann anschließend miteinander kaschiert (Schicht D) werden. Auch kombinierte Verfahren sind denkbar.

Es kommen bekannte, nach dem Stand der Technik übliche Anlagenkonzepte zur Anwendung, wobei im Fall der Blasfoliencoextrusion der Fertigungsvorgang dadurch gekennzeichnet ist, daß die Schmelze zum Schlauch geformt wird, welcher aufgeblasen, gekühlt und am anderen nun kalt gewordenem Ende von Quetschwalzen flachgelegt und geschlossen gehalten wird und anschließend die Folie aufgewickelt wird. Im Fall der Flachfoliencoextrusion werden sogenannte Chill-Roll-Anlagen eingesetzt, die als besonderes Merkmal große Kühlwalzen aufweisen, die den aus dem Werkzeug austretenden Schmelzefilm aufnehmen.

Die hier zu verwendenden Anlagen unterscheiden sich grundsätzlich von sogenannten Reckanlagen, die hier nicht verwendet werden können, da sie immer ein gerecktes Produkt erzeugen.

Als kombinierte Verfahren sind besonders wirtschaftlich:
- Flachfilmcoextrusion eines Trägers mit dem Aufbau A / D / B / D und anschließende Extrusions- bzw. Coextrusionsbeschichtung der Schicht C, gegebenenfalls mit Zwischenschicht(en) zwischen D und C.
- Flachfilmcoextrusion des Trägers A / EVOH / B, Auftrag eines Klebers D und anschließende Kaschierung einer zuvor als Blasfolie hergestellten Siegelschicht C, gegebenenfalls mit Zwischenschicht(en) zwischen D und C.
- Flachfilmcoextrusion des Trägers A/B/A, Auftrag eines Klebers D und anschließende Kaschierung einer zuvor als Blasfolie hergestellten Siegelschicht C, gegebenenfalls mit Zwischenschicht(en) zwischen D und C.

Zur Beurteilung der Erfindung wurde als ein Merkmal die Tiefziehbarkeit herangezogen. Zur Ermittlung der Tiefziehbarkeit wurden die zuvor gefertigten Folienmuster auf modernen Tiefziehautomaten, wie sie in der Verpackungsindustrie Anwendung finden (z.B. Tiromat, Multivac), getestet. Dazu wurden in der Maschine eingespannte Folienbahnen abschnittweise über eine Heizplatte erwärmt. Die Wärme kann dazu entweder von der Siegelseite oder auch der der Siegelseite abgewandten Seite der Folie erfolgen. Die mit Heizplattentemperaturen von 90 °C vorgewärmten Folien wurden anschließend durch Anlegen eines Vakuums in eine Mulde mit dem Rahmenmaß 185 x 115 mm gezogen. Durch Vergrößern der Ziehtiefe in Schritten von 5 mm wurde die maximale Ziehtiefe ermittelt, bei der die jeweiligen Folien ohne Defekte tiefzuziehen waren.

Ferner wurde das Reibungsverhalten der Folien (siegelschichtabgewandte Seite) gegen Metall ermittelt. Gemessen wurde der Haftreibungskoeffizient nach DIN 53 375. Dazu wurde ein Prüfgerät (VNNG) der Fa. Otto Brugger, München, eingesetzt. Die Meßbedinungen waren:
- Probestreifen: 800 mm x 200 mm
- Prüftisch: Stahl geschliffen
- Reibklotz: Masse 200 g, Prüffläche 63 mm x 64 mm
- Abzugsgeschwindigkeit: 100 mm/min
- Prüfweg: > 60 mm
- Kraftmessung: elektronisch

Darüber hinaus wurden Durchstoßversuche nach DIN 53 373 durchgeführt. Dazu werden mittels Rundschneider Folienproben mit einem Durchmesser von 80 mm aus den gefertigten Folienbahnen geschnitten. Der Durchstoßversuch wird mit einer Auftreffgeschwindigkeit von 4,5 m/sec mittels Dynatester durchgeführt. Dabei ist die Durchstoßrichtung senkrecht zur eingespannten Probenfläche. In Tabelle 1 ist die nach diesem Versuch gemessene Durchstoßkraft in [N] aufgelistet worden.

Die in Tabelle 1 dargestellten Reißdehnungen wurden mittels Zugversuch gemessen. Dazu wurden 15 mm breite Proben (Einspannlänge 100 mm, Prüfgeschwindigkeit 100 mm/min) zerrissen. Die Reißdehnung ist dann die Dehnung der Proben beim Reißen in [%]. Es wurde eine rechnergesteuerte Zugprüfmaschine eingesetzt.

### Beispiele und Vergleichsbeispiele

Der Gegenstand der Erfindung soll an Hand folgender Beispiele erklärt werden.

Gereckte Folien wurden nicht untersucht, da dem Fachmann allgemein bekannt ist, daß diese nicht tiefziehbar sind.

### A. Beispiel 1:

Mehrschichtige ungereckte Folie mit dem Aufbau
**PA6 / HV / (70%PA6 + 30%aPA) / HV / PE**
35 / 10 / 35 / 10 / 55 µm

Die fünfschichtige Folie wurde als Flachfolie coextrudiert. Die Gesamtdicke beträgt 145 µm. Als PA6 wurde Polyamid 6 der Dichte 1140 kg/m³ mit dem Kristallitschmelzpunkt 219°C und einer relativen Lösungsviscosität von 3,8 (PA-Konzentration 1%, Temperatur 25°C, gemessen in m-Kresol), als aPA ein amorphes Polyamid auf Basis von Isophthalsäure und Terephthalsäure und alkylsubstituiertem Hexamethylendiamin der Dichte 1190 kg/m³ und der Glasübergangstemperatur 127°C, als HV ein maleinsäureanhydridgepfropftes Linear Low Density Polyethylen der Dichte 910 kg/m³ mit dem Kristallitschmelzpunkt 125°C und einem Schmelzindex (MFI 190/2,16) von 4,0 g/10min und als PE ein Copolymer aus Ethylen und Okten (LLDPE) der Dichte 935 kg/m³ und dem Kristallitschmelzpunkt 126°C und einem Schmelzindex (MFI 190/2,16) von 4,4 g/10min eingesetzt.

### B. Beispiel 2:

Mehrschichtige ungereckte Folie mit dem Aufbau
**PA6 / HV / (70%PA6 + 30%aPA) */* HV / PE**
30/10 / 30/10/55 µm

Herstellung und Polymere wie in Beispiel 1.

### C. Beispiel 3:

Mehrschichtige ungereckte Folie mit dem Aufbau
**PA6** / **HV** / **(85%PA6 + 15%aPA)** / **HV** */* **PE**
35/10 / 35 / 10 / 55 µm

Herstellung und Polymere wie in Beispiel 1.

### D. Vergleichsbeispiel 1:

Mehrschichtige ungereckte Folie mit dem Aufbau
**PA6 / HV / PA6 / HV / PE**
35 / 10 / 35 / 10 / 55 µm

Herstellung und Polymere wie in Beispiel 1.

### E. Vergleichsbeispiel 2:

Mehrschichtige ungereckte Folie mit dem Aufbau
**PA6 / HV / (20%PA6 + 80%aPA) / HV / PE**
25/10/25/10/55 µm

Herstellung und Polymere wie in Beispiel 1.

### F. Vergleichsbeispiel 3:

Mehrschichtige ungereckte Folie mit dem Aufbau
**(85%PA6 + 15%aPA) / HV / (85%PA6 + 15%aPA) / HV / PE**
35 / 10 / 35 / 10 / 55 µm

Herstellung und Polymere wie in Beispiel 1.

Für die beschriebenen Folien A, B, C, D, E und F ist die Bewertung der Tiefziehbarkeit (mittels maximaler Ziehtiefe und Reißdehnung), das Reibungsverhalten (mittels Haftreibungskoeffizient) und die mechanische Festigkeit (mittels Durchstoßkraft) in Tabelle 1 dargestellt. Die Prüfungen wurden wie oben beschrieben durchgeführt.

**Tabelle 1**

| Reibungsverhalten, Tiefziehbarkeit und mechanische Festigkeit. | | | | | | |
|---|---|---|---|---|---|---|
| | | Folienaufbau | Haftreibungskoeffizient [-] | Reißdehnung [%] | maximale Ziehtiefe [mm] | Durchstoßkraft [N] |
| A | Bsp.1 | erfindungsgemäß | 0,13 | 626 | 85 | 280 |
| B | Bsp.2 | erfindungsgemäß | 0,16 | 586 | 85 | 300 |
| C | Bsp.3 | erfindungsgemäß | 0,16 | 689 | 80 | 280 |
| D | Bsp.4 | Polymerblend fehlt | 0,14 | 447 | 70 | 260 |
| E | Bsp.5 | zuviel aPA im Polymerblend | 0,16 | 461 | 65 | 200 |
| F | Bsp.6 | PA6-Schicht fehlt | 0,52 | 677 | 85 | 260 |

Wie aus Tabelle 1 ersichtlich ist, werden bei den erfmdungsgemäß hergestellten Folien A, B und C gute Reibkoeffizienten (deutlich < 0,20) bei gleichzeitig guter Tiefziehbarkeit (hier maximale Ziehtiefe ≥ 80 mm, Reißdehnung > 580 %) wie gewünscht erreicht. Ferner weisen die erfindungsgemäß hergestellten Folien eine hohe mechanische Festigkeit auf, wie die Messung der Durchstichkraft (≥ 280 N) zeigt.

Bei der nicht erfindungsgemäß hergestellten Folie D, es wurde die Polyamidblendschicht weggelassen, erzielt man zwar gute Reibwerte, die Folie ist aber schlecht tiefziehbar (hier maximale Ziehtiefe ≤ 70 mm, Reißdehnung ≤ 470 %) und weist eine geringe mechanische Festigkeit auf (Durchstoßkraft ≤ 260 N). Eine analoge Bewertung gilt für Folie E, welche einen zu großen Anteil an amorphem Polyamid im Polyamidblend hat. Bei Folie F fehlt die außen liegende PA6-Schicht. Hier erreicht man zwar eine ausreichende Tiefziehbarkeit, die Folie ist aber sehr stumpf (Haftreibungskoeffizient 0,52) und von geringer mechanischer Festigkeit.

## Patentansprüche

1. Gleitfähige, siegelbare, sehr gut tiefziehbare Verbundfolie auf Basis von Polyamid und Polyolefinen, **dadurch gekennzeichnet, daß** die Folie aus
- mindestens einer Schicht aus aliphatischem Polyamid (A) und
- mindestens einer Schicht aus einem Polymerblend (B), welches aus 10-60 Gew-% aus amorphem Polyamid, dass aus Isophthalsäure und/oder Terephthalsäure mit alkylsubstituiertem Hexamethylendiamin hergestellt wurde und 40-90 Gew-% aliphatischem Polyamid und
- mindestens einer thermoplastischen Siegelschicht (C), wobei die thermoplastische Siegelschicht einen Kristallitschmelzpunkt von 150°C oder kleiner aufweist und aus der Gruppe der Polyethylene, Copolymere der Polyethylene, Polypropylene, Copolymere der Polypropylene, Polybutylene oder Ionomere entstammt und
- mindestens einer Verbindungsschicht (D)
besteht, so angeordnet, daß eine Siegelschicht und eine Schicht aus aliphatischem Polyamid auf den Außenseiten der Folie liegen, und daß die Folie ungereckt ist.

2. Folie nach Anspruch 1, **dadurch gekennzeichnet, daß** das aliphatische Polyamid Polyamiden PA 6, PA 11, PA 12, PA 66, PA 6.66, PA 6.8, PA 6.9, PA 6.10, PA 6.11, PA 6.12, einem Copolymer aus den darin enthaltenen Monomereinheiten, oder aus einer Mischung der genannten Polyamide besteht.

3. Folie nach einem der Ansprüche 1 bis 2, **dadurch gekennzeichnet, daß** die thermoplastische Siegelschicht Polyethylen (LD oder LLD), Ethylen/Vinylacetat, Ethylen/Propylen-Copolymer, Ionomer der Zn- oder Na-Type, Polyisobutylen, Polybuten-1, Ethylen/(Met)acrylsäure-Copolymer oder ein Blend aus den in diesem Anspruch genannten Polymeren ist.

4. Folie nach einem der Ansprüche 1 bis 3, **dadurch gekennzeichnet, daß** die Verbindungschichten aus einem Klebstoffsystem und/oder einem polymeren Haftvermittler bestehen.

5. Folie nach einem der Ansprüche 1 bis 4, **dadurch gekennzeichnet, daß** das Klebstoffsystem ein 2-Komponenten Polyurethan-Klebstoffsystem ist.

6. Folie nach einem der Ansprüche 1 bis 5, **dadurch gekennzeichnet, daß** der polymere Haftvermittler ein anhydridmodifiziertes Polyethylen, ein Säurecopolymer des Ethylen, ein säuremodifiziertes Ethylenvinylacetat, ein säuremodifiziertes Ethylen(meth)acrylat, anhydridmodifiziertes Ethylen(meth)-acrylat, ein anhydridmodifiziertes Ethylenvinylacetat, ein säure-/acrylatmodifiziertes Ethylenvinylacetat oder ein Polymerblend ist, enthaltend mindestens einen der in diesem Anspruch genannten Haftvermittler.

7. Folie nach einem der Ansprüche 1 bis 6, **dadurch gekennzeichnet, daß** der Haftvermittler ein anhydridmodifiziertes, vorzugsweise maleinsäureanhydridmodifiziertes Polyethylen oder Polypropylen-Copolymer ist.

8. Folie nach einem der Ansprüche 1 bis 7, **dadurch gekennzeichnet, daß** mindestens eine Schicht mit Gleit- und/oder Antiblockmittel ausgerüstet ist.

9. Folie nach einem der Ansprüche 1 bis 8, **dadurch gekennzeichnet, daß** die Siegelschicht und/oder die Schicht aus aliphatischem Polyamid mit Gleit- und Antiblockmittel ausgerüstet sind.

10. Folie nach einem der Ansprüche 1 bis 9, **dadurch gekennzeichnet, daß** Gleitmittel ein Amidwachs ist.

11. Folie nach einem der Ansprüche 1 bis 10, **dadurch gekennzeichnet, daß** Antiblockmittel modifiziertes natürliches Kieselsäureprodukt ist.

12. Folie nach einem der Ansprüche 1 bis 11, **dadurch gekennzeichnet, daß** die Folie den Aufbau A / D / B / D / C oder A / B / A / D / C oder A / EVOH / B / D / C oder aufweist, wobei EVOH ein Ethylen/Vinylalkohol-Copolymeres ist und zwischen den Schichten D und C gegebenfalls Zwischenschichten enthalten sind.

13. Folie nach einem der Ansprüche 1 bis 12, **dadurch gekennzeichnet, daß** die Gesamtdicke der Folie 15 bis 400 µm beträgt.

14. Verwendung einer Folie gemäß einem der Ansprüche 1 bis 13 als Verpackungsfolie.

15. Verwendung einer Folie gemäß Anspruch 14 als Verpackungsfolie für Lebensmittel.

## Claims

1. Heat-sealable composite film having good surface slip with very good thermoforming properties based on polyamide and polyolefins, **characterised in that** the film consists of
- at least one layer of aliphatic polyamide (A) and
- at least one layer of a polymer blend (B) consisting of 10-60 wt.% of amorphous polyamide, which has been produced from isophthalic acid and/or terephthalic acid with alkyl-substituted hexamethylenediamine, and 40-90 wt.% of aliphatic polyamide and
- at least one thermoplastic heat sealing layer (C), wherein the thermoplastic heat sealing layer has a crystallite melting point of 150°C or below and originates from the group of polyethylenes, polyethylene copolymers, polypropylenes, polypropylene copolymers, polybutylenes or ionomers and
- at least one bonding layer (D),
arranged in such a manner that a heat sealing layer and a layer of aliphatic polyamide are located on the outer sides of the film and **in that** the film is unstretched.

2. Film according to claim 1, **characterised in** the aliphatic polyamide consists of polyamides PA 6, PA 11, PA 12, PA 66, PA 6,66, PA 6,8, PA 6,9, PA 6,10, PA 6,11, PA 6,12, a copolymer prepared from the monomer units contained therein or of a mixture of the stated polyamides.

3. Film according to one of claims 1 to 2, **characterised in that** the thermoplastic heat sealing layer is polyethylene (LD, LLD), ethylene/vinyl acetate, ethylene/propylene copolymer, Zn or Na type ionomer, polyisobutylene, poly-1-butene, ethylene/(meth)acrylic acid copolymer or a blend of the polymers stated in this claim.

4. Film according to one of claims 1 to 3, **characterised in that** the bonding layers consist of an adhesive system and/or a polymeric coupling agent.

5. Film according to one of claims 1 to 4, **characterised in that** the adhesive system is a 2-component polyurethane adhesive system.

6. Film according to one of claims 1 to 5, **characterised in that** the polymeric coupling agent is an anhydride-modified polyethylene, an acid copolymer of ethylene, an acid-modified ethylene vinyl acetate, an acid-modified ethylene (meth)acrylate, anhydride-modified ethylene (meth)acrylate, an anhydride-modified ethylene vinyl acetate, an acid/acrylate-modified ethylene vinyl acetate or a polymer blend containing at least one of the coupling agents stated in this claim.

7. Film according to one of claims 1 to 6, **characterised in that** the coupling agent is an anhydride-modified, preferably maleic anhydride modified polyethylene or polypropylene copolymer.

8. Film according to one of claims 1 to 7, **characterised in that** at least one layer is provided with lubricants and/or anti-blocking agents.

9. Film according to one of claims 1 to 8, **characterised in that** the heat sealing layer and/or the aliphatic polyamide layer are provided with lubricants and/or anti-blocking agents.

10. Film according to one of claims 1 to 9, **characterised in that** the lubricant is an amide wax.

11. Film according to one of claims 1 to 10, **characterised in that** the anti-blocking agent is a modified natural silica product.

12. Film according to one of claims 1 to 11, **characterised in that** the film has the structure A / D / B / D / C or A / B / A / D / C or A / EVOH / B / D / C, wherein EVOH is an ethylene/vinyl alcohol copolymer and there are optionally interlayers between layers D and C.

13. Film according to one of claims 1 to 12, **characterised in that** the total thickness of the film is 15 to 400 *µ*m.

14. Use of a film according to one of claims 1 to 13 as a packaging film.

15. Use of a film according to claim 14 as a packaging film for foodstuffs.

## Revendications

1. Feuille composite résistant au blocage, scellable, très bien emboutissable en profondeur, à base d'un polyamide et de polyoléfines, qui est **caractérisée en ce que** la feuille consiste en
- au moins une couche en polyamide aliphatique (A) et
- au moins une couche en un mélange polymère (B), qui consiste en 10-60% en poids de polyamide amorphe qui est préparé à partir d'acide isophtalique et/ou d'acide téréphtalique avec une hexaméthylènediamine alcoylsubstituée et 40-90% de polyamide aliphatique, et
- au moins une couche scellable thermoplastique (C), où la couche scellable thermoplastique présente un point de fusion des cristallites de 150°C ou moins et dérive du groupe des polyéthylène, copolymères de polyéthylène, polypropylène, copolymères de propylène, polybutylène ou ionomères et
- au moins une couche de liaison (D)
et est disposée de sorte qu'une couche scellable et une couche en polyamide aliphatique se trouvent sur les faces extérieures de la feuille et que la feuille est non étirée.

2. Feuille suivant la revendication 1, **caractérisée en ce que** le polyamide aliphatique consiste en les polyamides PA 6, PA 11, PA 12, PA 66, PA 6.66, PA 6.8, PA 6.9, PA 6.10, PA 6.11, PA 6.12, un copolymère des unités monomères de ces polyamides ou un mélange des polyamides cités.

3. Feuille suivant l'une quelconque des revendications 1 à 2, **caractérisée en ce que** la couche scellable thermoplastique consiste en du polyéthylène (LD ou LLD), l'éthylène/acétate de vinyle, un copolymère éthylène/propylène, un ionomère de type Zn ou Na, le polyisobutylène, le polybutène-1, un copolymère éthylène/acide (méth)acrylique ou un mélange des polymères cités dans la présente revendication.

4. Feuille suivant l'une quelconque des revendications 1 à 3, **caractérisée en ce que** les couches de liaison consistent en un système collant et/ou en une aide polymère à l'adhérence.

5. Feuille suivant l'une quelconque des revendications 1 à 4, **caractérisée en ce que** le système collant est un système collant polyuréthanne à 2 composants.

6. Feuille suivant l'une quelconque des revendications 1 à 5, **caractérisée en ce que** l'aide polymère à l'adhérence est un polyéthylène modifié par un anhydride, un copolymère acide de l'éthylène, un éthylène-acétate de vinyle modifié par un acide, un éthylène-(méth)acrylate modifié par un acide, un éthylène-(méth)acrylate modifié par un anhydride, un éthylène-acétate de vinyle modifié par un anhydride, un éthylène-acétate de vinyle modifié par un acide/acrylate ou un mélange polymère contenant au moins l'une des aides à l'adhérence citées dans la présente revendication.

7. Feuille suivant l'une quelconque des revendications 1 à 6, **caractérisée en ce que** l'aide à l'adhérence est un copolymère polyéthylène ou polypropylène modifié par un anhydride, de préférence modifié par l'anhydride maléique.

8. Feuille suivant l'une quelconque des revendications 1 à 7, **caractérisée en ce qu'**au moins une couche est munie d'un lubrifiant et/ou agent antiblocage.

9. Feuille suivant l'une quelconque des revendications 1 à 8, **caractérisée en ce que** la couche scellable et/ou la couche en polyamide aliphatique est munie d'un lubrifiant et/ou agent antiblocage

10. Feuille suivant l'une quelconque des revendications 1 à 9, **caractérisée en ce que** le lubrifiant est une cire amide.

11. Feuille suivant l'une quelconque des revendications 1 à 10, **caractérisée en ce que** l'agent antiblocage est un produit naturel modifié de l'acide silicique.

12. Feuille suivant l'une quelconque des revendications 1 à 11, **caractérisée en ce que** la feuille présente la structure A / D / B / D / C ou A / B / A / D / C ou A / EVOH / B / D / C, où EVOH est un copolymère éthylène/vinylalcool et entre les couches D et C, se trouvent facultativement des couches intermédiaires.

13. Feuille suivant l'une quelconque des revendications 1 à 12, **caractérisée en ce que** l'épaisseur totale de la feuille se situe dans l'intervalle allant de 15 à 400 µm.

14. Utilisation d'une feuille suivant l'une quelconque des revendications 1 à 13, comme feuille d'emballage.

15. Utilisation d'une feuille suivant la revendication 14, comme feuille d'emballage pour aliments.
